# EUROPEAN PATENT APPLICATION

(11) **EP 1 425 960 A1**
(43) Date of publication of application: **09.06.2004**
(21) Application number: 03380282.8
(22) Date of filing: 04.12.2003
(51) Int. Cl.: A01K 11/00

(54) **Die-stamped marks on identification tags for livestock**

(30) Priority: 04.12.2002 ES 200202918
(71) Applicant: Cantudal, S.L., 45004 Toledo (ES)
(72) Inventor: Sanz Timon, José Manuel, 45004 Toledo (ES)
(74) Representative: Aymat Gonzalez, José Maria

(57) **Abstract**

Die-stamped marks on identification tags (1) for livestock, for attach said tags (1) onto the ears of the animals to be identified.The graphic marks (4) constituting the identification of each animal are made by die-stamping through the material of the structure of the supporting part (2).

## Description

### OBJECT OF THE INVENTION

The present descriptive report refers to an Application for a Utility Model corresponding to a mark die-punched on a tag for livestock identification, which is characterised in that said tag is constituted by a body made from any rigid or semi-rigid material provided with means to attach such tag to an animal preferably onto one ear of said animal, incorporating a part as afore said made of any rigid or semi-rigid material on which the identification data of said animal is shown, such data being shown on the body of any rigid or semi-rigid material properly stamped or punched, possessing the appropriate means so such data cannot be faked owing to the graphic marks imprinted on the body of the tag by means of die-pressing, thus preventing specifically that said graphic marks can be faked or even erased by the animal itself owing to its conventional living habits.

### FIELD OF THE INVENTION

The present invention has its field of application within the industry that manufactures tags or other livestock identification elements

### BACKGROUND OF THE INVENTION

The applicant is aware of the existence at the present time of a plurality of tags, all of them constituted by means of attachment of said identification marks onto one ear of animals, these tags are generally formed by pieces of some type of rigid or semi-rigid material and provided with fastening means, and incorporating on the surface graphic marks to identify the origin, owner and stock farm to which the animal so identified belongs.

It has been specifically proven that, with the kind of general life lead by an animal in the pasture ground, the tags experience a plurality of deformations leading to total or partial erasure of the graphic marks incorporated onto the tag surface, and consequently, it becomes at times difficult to ascertain the identity of the animal in question.

It has been determined, with the purpose of solving the above problem, that it is necessary to make available a tag having such graphic marks placed on the tag itself in a indelible manner, as per instance, by properly die-stamping such marks to eliminate any possibility of being defaced.

Nevertheless, the applicant has no knowledge of the present availability of an invention presenting the ideal characteristics referred to above.

### DESCRIPTION OF THE INVENTION

The die-stamped marks on the livestock identification tag as proposed by the present invention are formed by an element provided with a plurality of advantageous characteristics that eliminate the anomalies of presently existing tags, where the marks are etched or painted to show the identity numbers of the animal carrying the identification, subsequently preventing the proper visual identification.

More specifically, the dry-stamped marks on the livestock identification tags the object of the present invention are formed on a piece of any rigid or semi-rigid material having conventional attachment means to fasten the tag to the ear of the carrier, using for that purpose the proper tool to assure the tag proper is adequately fixed thereon.

The convenient die-stamping of the identifying marks is made on the surface of the tag, being these marks properly die-stamped through the structure of the tag material, thus absolutely permitting, regardless of eventual deposits of residues, mud or other foreign matter, that the animal carrying the tag is identified at all times, even from a certain distance.

### DESCRIPTION OF THE DRAWINGS

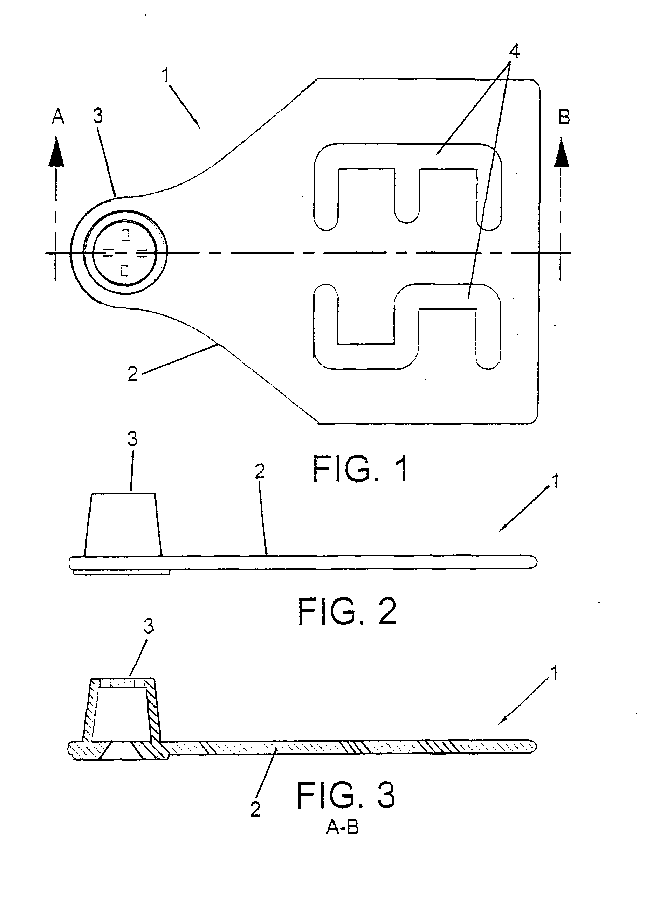

To make the description complete, and in order to assist to better understand the characteristics of the invention, the present descriptive report is accompanied, as integral part thereof, by a drawing sheet, wherein the following is represented for illustrative purposes without limitation:
Figure number 1 represents a plan view of the object of the invention corresponding to a tag with animal identification marks die-stamped thereon.
Figure number 2 shows a lateral elevation view of the object illustrated in Figure number 1.
Figure 3 corresponds to a cross-sectional view through A-B of the object shown in Figure number 1.

### PREFERRED EMBODIMENT OF THE INVENTION

In viewing these Figures, it may be observed that the tag (1) with die-stamped marks thereon, comprises a body (2) made from any rigid or semi-rigid material that may adopt any shape in plan, the whole incorporating means (3) to attach said tag to one ear of the animal with the co-operation of a fastening means to be applied either manually or using an appropriate tool, having generally the surface of said body (2) die-stamped graphic marks going through the material, to identify the animal by number, condition, stock farm and other required elements.

The graphic marks (4) die-stamped through the material absolutely prevent that such marks may be erased by the action of the weather, friction, scratching and the like, that could render impossible viewing such graphic marks in the case they were incorporated by paint or other conventional means that may be readily defaced whilst, if such marks were die-stamped through, they could be recognised, even when covered by organic matter.

## Claims

1. Die-stamped marks on identification tags for livestock comprising fastening elements (3) to attach said tags onto the ears of the animals to be identified, said tags made from a rigid or semi-rigid material (2) **characterised in that** the graphic marks constituting the identification of each animal are made by die-stamping through the material (4) of the structure of the supporting part (2).
